# EUROPÄISCHE PATENTANMELDUNG

(11) **EP 2 505 983 A1**
(43) Veröffentlichungstag der Anmeldung: **03.10.2012**
(21) Anmeldenummer: 11160433.6
(22) Anmeldetag: 30.03.2011
(51) Int. Cl.: G01M 13/02

(54) **Verspannprüfstand für Getriebe**

(71) Anmelder: SIEMENS AKTIENGESELLSCHAFT, 80333 München (DE)
(72) Erfinder: Gutsche, Joachim, 91052, Erlangen (DE); Korzuschnik, Michael, 91077, Hetzles (DE); Lorenz, Günter, 90455, Nürnberg (DE)

(57) **Zusammenfassung**

In einem Verspannprüfstand ist ein Riemen- oder Kettenantrieb mit zwei fest angeordnete Riemenstationen und einer linear zwischen den beiden fest angeordneten Riemenstationen beweglichen Riemenstation vorgesehen. Zwischen der linear beweglichen Riemenstation und einem Lagerbock für einen Prüfling ist eine teleskopierbare Gelenkwelle für einen Längenausgleich angeordnet. Im Prüfbetrieb wird die linear bewegliche Riemenstation verstellt und hierdurch eine überlagerte Drehbewegung der mit dem Prüfling verbundenen Gelenkwelle erzeugt.

## Beschreibung

Aus DE 10 2006 047 268 A1 ist eine Belastungsvorrichtung für einen Prüfstand zum Prüfen eines Prüflings bekannt, die zumindest zwei Belastungsmaschinen umfaßt. Dabei weist eine erste Belastungsmaschine mit einen ersten Elektromotor auf, und eine zweite Belastungsmaschine umfaßt einen zweiten Elektromotor. Dabei sind die Elektromotoren jeweils für einen vorbestimmten Belastungsbereich ausgestattet, wobei sich der Belastungsbereich der ersten Belastungsmaschine vom Belastungsbereich der zweiten Belastungsmaschine unterscheidet. Die Belastungsmaschinen sind einzeln an den Prüfling anschließbar bzw. über eine Kupplung zur Übertragung eines Drehmoments verbindbar. Dadurch ist ein zu testender Prüfbereich des Prüflings im wesentlichen vollständig abgedeckt.

In EP 0 377 950 A2 ist eine Maschinensimulationsvorrichtung zur Bildung eines Eingangsdrehmoments für Testzwecke zu einer Antriebsvorrichtung für ein Kraftfahrzeug beschrieben, die einen ersten und einen zweiten elektrischen Motor und eine Übersetzungsgetriebeeinheit aufweist. Ein Abtrieb der Übersetzungsgetriebeeinheit ist mit dem Eingang des Lastschaltgetriebes bzw. Antriebsgetriebes verbindbar. Dabei umfaßt die Getriebeeinheit eine erste Eingangswelle, die mit dem Abtrieb des ersten Motors verbunden ist und ein erstes Eingangsgetriebezahnrad trägt. Das erste Eingangsgetriebezahnrad wird durch die erste Eingangswelle angetrieben Außerdem umfaßt die Getriebeeinheit eine zweite Eingangswelle, die mit dem Abtrieb des zweiten Motors verbunden ist und ein zweites Eingangsgetriebezahnrad trägt. Das zweite Eingangsgetriebezahnrad wird durch die zweite Eingangswelle angetrieben.

Aus DE 34 24 923 A1 ist ein Verspannprüfstand zur Prüfung von Bauteilen zur Drehmomentübertragung bekannt, beispielsweise Wellen, Kupplungen, Gelenke, Zahnräder. Dazu dienen eine oder mehrere Verspannkupplungen, die jeweils in ein Zahnrad von zwei Getrieben integriert ist bzw. sind. Dadurch ergibt sich ein kompakter Aufbau und es sind wirklichkeitsgetreue extrem schnelle Änderungen von Drehzahl, Drehmoment und Drehrichtung sowie Schwingungstests mit hoher Frequenz und hoher Genauigkeit möglich.

Der vorliegenden Erfindung liegt die Aufgabe zugrunde, einen zuverlässigen und kostengünstig realisierbaren Verspannprüfstand für Getriebe zu schaffen.

Diese Aufgabe wird durch einen Verspannprüfstand mit den in Anspruch 1 angegebenen Merkmalen gelöst. Vorteilhafte Weiterbildungen der vorliegenden Erfindung sind in den abhängigen Ansprüchen angegeben.

Der erfindungsgemäße Verspannprüfstand für Getriebe umfaßt einen Antriebsmotor und eine an den Antriebsmotor angeschlossene Antriebswelle mit zumindest einer mechanischen Schnittstelle für eine Verbindung mit einer Antriebswelle oder Abtriebswelle eines ersten Getriebes. Zusätzlich ist eine Ausgleichswelle mit zumindest zwei mechanischen Schnittstellen für eine Verbindung zwischen der Abtriebswelle des ersten Getriebes und einer Abtriebswelle eines zweiten Getriebes oder für eine Verbindung zwischen der Antriebswelle des ersten Getriebes und der Antriebswelle des zweiten Getriebes vorgesehen. Die beiden Getriebe sind vorzugsweise baugleich der im wesentlichen baugleich.

Darüber hinaus umfaßt der erfindungsgemäße Verspannprüfstand eine Abtriebswelle mit zumindest einer mechanischen Schnittstelle für eine Verbindung mit der Antriebswelle oder Abtriebswelle des zweiten Getriebes. Ein umlaufendes Zugmittel, beispielsweise eine Kette oder ein Riemen, steht formschlüssig mit zumindest einem ersten, zweiten und dritten Umlaufrad in Verbindung. In einer ersten und zweiten ortfesten Station ist jeweils eine mit dem ersten oder zweiten Umlaufrad drehfest verbundene Welle gelagert. Die in der ersten Station gelagerte Welle ist die Antriebswelle. Zusätzlich ist eine dritte zwischen der ersten und zweiten Station in oder gegen Umlaufrichtung des Zugmittels bewegliche Station vorgesehen, in der eine mit dem dritten Umlaufrad drehfest verbundene Welle gelagert ist. Die in der dritten Station gelagerte Welle ist die Abtriebswelle. Somit bilden die Antriebswelle, das erste Getriebe, die Ausgleichswelle, das zweite Getriebe, die Abtriebswelle und das Zugmittel einen geschlossenen Antriebskreis. Beim erfindungsgemäßen Verspannprüfstand entfällt ein bisher übliches Überlagerungsgetriebes. Hieraus resultieren ein vereinfachter Prüfstandsaufbau und Kosteneinsparungen.

Die Antriebswelle ist vorzugsweise zusätzlich zumindest in einem zwischen der ersten Station und dem ersten Getriebe angeordneten ersten Lagerbock gelagert. In diesem Fall ist die Abtriebswelle zusätzlich zumindest in einem zwischen der dritten Station und dem zweiten Getriebe angeordneten zweiten Lagerbock gelagert. Darüber hinaus kann die Antriebswelle einen zwischen der ersten Station und ersten Lagerbock angeordneten Gelenkwellenabschnitt umfassen, beispielsweise einen Kardanwellenabschnitt. Dabei umfaßt die Abtriebswelle einen zwischen der dritten Station und zweiten Lagerbock angeordneten Gelenkwellenabschnitt. Entsprechend einer besonders bevorzugten Ausführungsvariante umfaßt der Gelenkwellenabschnitt der Abtriebswelle ein Längenausgleichselement, insbesondere ein Teleskopelement, so daß eine Linearbewegung der dritten Station kompensiert werden kann.

Die dritte Station ist vorzugsweise linear zwischen der ersten und zweiten Station linear beweglich, so daß ein Verspannmoment infolge einer überlagerten Drehbewegung der Abtriebswelle klar definiert werden kann. Beispielsweise kann die dritte Station in einem Prüfbetrieb linear beweglich sein, und durch eine lineare Bewegung der dritten Station kann eine überlagerte Drehbewegung der Abtriebswelle zur Erzeugung eines Verspannmoments erzeugt werden.

Die vorliegende Erfindung wird an einem Ausführungsbeispiel anhand der Zeichnung näher erläutert. Es zeigt
- Figur 1: einen Verspannprüfstand für Getriebe mit einem Zugmittelantriebssystem in Draufsicht,
- Figur 2: drei Stationen des Zugmittelantriebssystems des Verspannprüfstands gemäß Figur 1 in perspektivischer Darstellung.

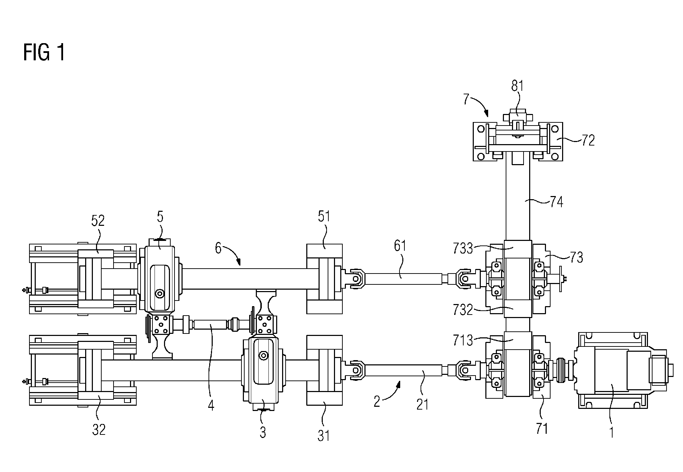

Der in Figur 1 dargestellte Verspannprüfstand für Getriebe umfaßt einen Antriebsmotor 1 und eine an den Antriebsmotor 1 angeschlossene Antriebswelle 2 mit zumindest einer mechanischen Schnittstelle für eine Verbindung mit einer Antriebswelle oder Abtriebswelle eines ersten Getriebes 3. Zwischen der Abtriebswelle des ersten Getriebes 3 und einer Abtriebswelle eines zweiten Getriebes 5 bzw. zwischen der Antriebswelle des ersten Getriebes 3 und der Antriebswelle des zweiten Getriebes 5 ist eine Ausgleichswelle 4 angeschlossen, die entsprechende mechanische Schnittstellen zur Verbindung mit An- oder Abtriebswellenflanschen der Getriebe 3, 5 aufweist. An eine An- bzw. Abtriebswelle des zweiten Getriebes 5 ist eine Abtriebswelle 6 des Verspannprüfstands über eine mechanische Schnittstelle angeschlossen. Im vorliegenden Ausführungsbeispiel stellt das zweite Getriebe 5 einen Prüfling dar, und beide Getriebe 3, 5 sind baugleich.

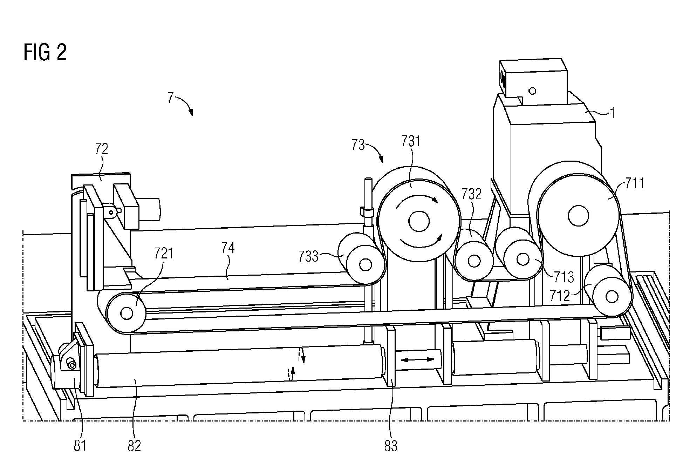

In Figur 2 ist ein Zugmittelantriebssystem 7 des Verspannprüfstands gemäß Figur 1 perspektivisch dargestellt. Das Zugmittelantriebssystem 7 umfaßt ein umlaufendes Zugmittel 74, vorzugsweise eine Kette oder einen Riemen. Das Zugmittel 74 steht formschlüssig mit insgesamt 7 Umlaufrädern 711-713, 721, 731-733 in Verbindung. Darüber hinaus umfaßt das Zugmittelantriebssystem 7 eine erste 71 und zweiten ortfesten Station 72, in denen jeweils eine mit einem ersten 711 oder zweiten Umlaufrad 721 drehfest verbundene Welle gelagert ist. Dabei ist die in der ersten Station 71 gelagerte Welle die Antriebswelle 2 des Verspannprüfstands. Zusätzlich ist eine dritte zwischen der ersten 71 und zweiten Station 72 in oder gegen Umlaufrichtung des Zugmittels 74 linear bewegliche Station 73 vorgesehen, in der eine mit einem Umlaufrad 731 drehfest verbundene Welle gelagert ist. Die in der dritten Station 73 gelagerte Welle ist die Abtriebswelle 6 des Verspannprüfstands. Somit bilden die Antriebswelle 2, das erste Getriebe 3, die Ausgleichswelle 4, das zweite Getriebe 5, die Abtriebswelle 6 und das Zugmittel 74 einen geschlossenen Antriebskreis.

Die dritte Station 73 ist in einem Prüfbetrieb mittels eines Elektromotors 81, einer an den Elektromotor 81 angeschlossenen Gewindestange 82 und eines durch die Gewindestange 82 angetriebenen Schlittens 83 linear beweglich. Der Schlitten 83 ist unmittelbar mit der dritten Station 73 verbunden. Durch eine lineare Bewegung der dritten Station 73 kann eine überlagerte Drehbewegung der Abtriebswelle 6 zur Erzeugung eines Verspannmoments erzeugt werden.

Die Antriebswelle 2 ist zusätzlich in einem zwischen der ersten Station 71 und dem ersten Getriebe 3 angeordneten ersten Lagerbock 31 gelagert. Die Abtriebswelle 6 ist zusätzlich in einem zwischen der dritten Station 73 und dem zweiten Getriebe 5 angeordneten zweiten Lagerbock 51 gelagert. Zur Lagerung der Antriebswelle 2 und der Abtriebswelle 6 sind darüber hinaus ein dritter Lagerbock 32 und ein vierter Lagerbock 52 vorgesehen.

Die Antriebswelle 2 umfaßt einen zwischen der ersten Station 71 und dem ersten Lagerbock 31 angeordneten Gelenkwellenabschnitt 21. In entsprechender Weise weist die Abtriebswelle 6 einen zwischen der dritten Station 73 und dem zweiten Lagerbock 51 angeordneten Gelenkwellenabschnitt 61 auf. Der Gelenkwellenabschnitt 61 der Abtriebswelle 6 umfaßt zusätzlich ein Teleskopelement als Längenausgleichselement im Hinblick auf eine Linearbewegung der dritten Station 73.

Anstelle einer linear zwischen der ersten 71 und zweiten Station 72 beweglichen dritten Station 73 kann entsprechend einer alternativen Ausführungsform zumindest ein Umlaufrad 712, 713, 721, 732 an der ersten 71, zweiten 72 bzw. dritten Station 73 verschiebbar ausgestaltet sein, um eine Zugmittelverlaufsänderung zu bewirken. Dabei ist auch die dritte Station 73 ortsfest. Durch eine Verschiebung zumindest eines Umlaufrads 712, 713, 721, 732 kann eine für ein Zugmittelgetriebe wirksame Erstreckung des Zugmittels 74 zwischen der ersten 71 und zweiten Station 72 geändert werden, woraus eine Verspannung zwischen Antriebswelle 2 und Abtriebswelle 6 resultiert. Beispielsweise kann eine Verspannung erzeugt werden durch eine Verlagerung zumindest eines zwischen der ersten 71 und dritten Station 73 angeordneten Umlaufrads 713, 732. Für einen Zugmittellängenausgleich wird in diesem Fall zusätzlich zumindest ein äußeres Umlaufrad 712, 721 an der ersten 71 bzw. zweiten Station 72 hinsichtlich seiner Achsposition verschoben. Darüber hinaus können entsprechend der alternativen Ausführungsform die zweite 72 und dritte Station 73 zu einer kombinierten ortsfesten Station zusammengefaßt werden, in der die Abtriebswelle 6 gelagert ist.

Die Anwendung der vorliegenden Erfindung ist nicht auf die beschriebenen Ausführungsbeispiele beschränkt.

## Patentansprüche

1. Verspannprüfstand für Getriebe mit
- einem Antriebsmotor,
- einer an den Antriebsmotor angeschlossenen Antriebswelle mit zumindest einer mechanischen Schnittstelle für eine Verbindung mit einer Antriebswelle oder Abtriebswelle eines ersten Getriebes,
- einer Ausgleichswelle mit zumindest zwei mechanischen Schnittstellen für eine Verbindung zwischen der Abtriebswelle des ersten Getriebes und einer Abtriebswelle eines zweiten Getriebes oder für eine Verbindung zwischen der Antriebswelle des ersten Getriebes und der Antriebswelle des zweiten Getriebes,
- einer Abtriebswelle mit zumindest einer mechanischen Schnittstelle für eine Verbindung mit der Antriebswelle oder Abtriebswelle des zweiten Getriebes,
- einem umlaufenden Zugmittel, das formschlüssig mit zumindest einem ersten, zweiten und dritten Umlaufrad in Verbindung steht,
- eine ersten und zweiten ortfesten Station, in denen jeweils eine mit dem ersten oder zweiten Umlaufrad drehfest verbundene Welle gelagert ist, wobei die in der ersten Station gelagerte Welle die Antriebswelle ist,
- einer dritten zwischen der ersten und zweiten Station in oder gegen Umlaufrichtung des Zugmittels beweglichen Station, in der eine mit dem dritten Umlaufrad drehfest verbundene Welle gelagert ist, wobei die in der dritten Station gelagerte Welle die Abtriebswelle ist, und wobei die Antriebswelle, das erste Getriebe, die Ausgleichswelle, das zweite Getriebe, die Abtriebswelle und das Zugmittel einen geschlossenen Antriebskreis bilden.

2. Verspannprüfstand nach Anspruch 1,
bei dem die dritte Station zwischen der ersten und zweiten Station linear beweglich ist.

3. Verspannprüfstand nach einem der Ansprüche 1 bis 2,
bei dem die dritte Station in einem Prüfbetrieb linear beweglich ist, und bei dem durch eine lineare Bewegung der dritten Station eine überlagerte Drehbewegung der Abtriebswelle zur Erzeugung eines Verspannmoments erzeugbar ist.

4. Verspannprüfstand nach einem der Ansprüche 1 bis 3,
bei dem die Antriebswelle zusätzlich zumindest in einem zwischen der ersten Station und dem ersten Getriebe angeordneten ersten Lagerbock gelagert ist, und bei dem die Abtriebswelle zusätzlich zumindest in einem zwischen der dritten Station und dem zweiten Getriebe angeordneten zweiten Lagerbock gelagert ist.

5. Verspannprüfstand nach Anspruch 4,
bei dem die Antriebswelle einen zwischen der ersten Station und ersten Lagerbock angeordneten Gelenkwellenabschnitt umfaßt, und bei dem die Abtriebswelle einen zwischen der dritten Station und zweiten Lagerbock angeordneten Gelenkwellenabschnitt umfaßt.

6. Verspannprüfstand nach Anspruch 5,
bei dem der Gelenkwellenabschnitt der Abtriebswelle ein Längenausgleichselement umfaßt, insbesondere ein Teleskopelement.

7. Verspannprüfstand nach Anspruch 1,
bei dem auch die dritte Station ortsfest ist, bei anstelle einer linear zwischen der ersten und zweiten Station beweglichen dritten Station zumindest ein verschiebbares Umlaufrad an der ersten, zweiten und/oder dritten Station zur Bewirkung einer Zugmittelverlaufsänderung vorgesehen ist, bei dem durch eine Verschiebung des zumindest einen Umlaufrads eine für ein Zugmittelgetriebe wirksame Erstreckung des Zugmittels zwischen der ersten und zweiten Station änderbar ist, und bei dem durch eine Änderung der wirksamen Länge des Zugmittels eine Verspannung zwischen Antriebswelle und Abtriebswelle erzeugbar ist.

8. Verspannprüfstand nach Anspruch 7,
bei dem die zweite und dritte Station zu einer kombinierten ortsfesten Station zusammengefaßt sind, in der die Abtriebswelle gelagert ist.

9. Verspannprüfstand nach einem der Ansprüche 1 bis 8,
bei dem das erste oder zweite Getriebe ein Prüfling ist, und bei dem das erste und zweite Getriebe baugleich oder im wesentlichen baugleich sind.

10. Verspannprüfstand nach einem der Ansprüche 1 bis 9,
bei dem das umlaufende Zugmittel eine Kette oder ein Riemen ist.
